# EUROPEAN PATENT APPLICATION

(11) **EP 0 549 541 A1**
(43) Date of publication of application: **30.06.1993**
(21) Application number: 92830648.9
(22) Date of filing: 01.12.1992
(51) Int. Cl.: B60R 16/02

(54) **A motor vehicle with remote control device for on-board electronic or electrical systems and apparatus**

(30) Priority: 23.12.1991 IT TO911029
(71) Applicant: FIAT AUTO S.p.A., I-10135 Torino (IT)
(72) Inventor: Tagliabo', Fulvio, I-10156 Torino (IT); Audisio, Giorgio, I-10138 Torino (IT); Borrione, Aldo, I-10144 Torino (IT)
(74) Representative: Quinterno, Giuseppe

(57) **Abstract**

The motor vehicle includes a receiver (C) for coded radiation, in particular infra-red radiation, installed in the motor vehicle passenger compartment;
an electrical connection network (R), in particular of multiplex type, to which are connected the inputs of on-board electronic or electrical devices or apparatus (S1-SN), and
a portable remote control device (RC), including a control keyboard (K), a coded radiation emitter (E), in particular for emmitting infra-red radiation, adapted to radiate coded adjustment and control signals receivable by the said receiver (C) and operable to allow selective control of the operation of the said on-board electronic or electrical systems or apparatus (S1-SN).

## Description

The present invention relates to motor vehicles in which, with an increasingly established tendency, various on-board electronic or electrically systems or apparatus are installed such as air conditioning systems, radio and hi-fi systems in general, etc.

Typically, such on-board systems and apparatus are provided with associated manual control devices usually disposed on the instrument panel of the motor vehicle, or in its immediate vicinity. Such devices allow control of the associated on-board systems and apparatus by the driver and, often with some inconvenience, the front seat passenger.

To allow activation/disactivation, adjustment and control in general of the said systems and apparatus by rear seat passengers it has been thought of duplicating (at least in part) the said control devices by installing further control devices in the rear part of the passenger compartment, connected by means of electrical conductors to the associated on-board systems and apparatus which they are to control.

Such arrangements, however, have the disadvantage of requiring the installation of supplementary cables.

The purpose of the present invention is to obviate this disadvantage.

This object is achieved according to the invention in a motor vehicle including a plurality of on-board electronic or electrical systems or apparatus, provided with respective manual control devices operable from within the passenger compartment, characterised by the fact that it comprises
a coded radiation receiver device, in particular for receiving infra red radiation, installed in the passenger compartment of the vehicle;
a connecting electrical network, in particular of multiplex type, to which are connected control inputs for the said on-board electronic or electrical apparatus or devices;
an interface and decoder device interposed between the receiver device and the said network, and by the fact that the said control means comprise
a portable remote control device, including a control keyboard, a coded radiation, in particular infra red radiation, emitter, adapted to radiate coded control and adjustment signals receivable by the said receiver and operable to allow selective control of the operation of the said on-board electronic or electrical systems or apparatus.

According to a further characteristic, in one embodiment the said remote control device comprises a multi-functional keyboard including at least one selector device and a multiplicity of multifunctional keys which, in dependence on the setting of the said selector device, allow control of pre-established functions of a different on-board electronic or electrical system or apparatus.

Conveniently, the portable remote control device includes a display operable to provide an indication of the on-board system or apparatus corresponding to the setting of the said at least one selector device and of the function corresponding to the multifunctional key operated at any one time.

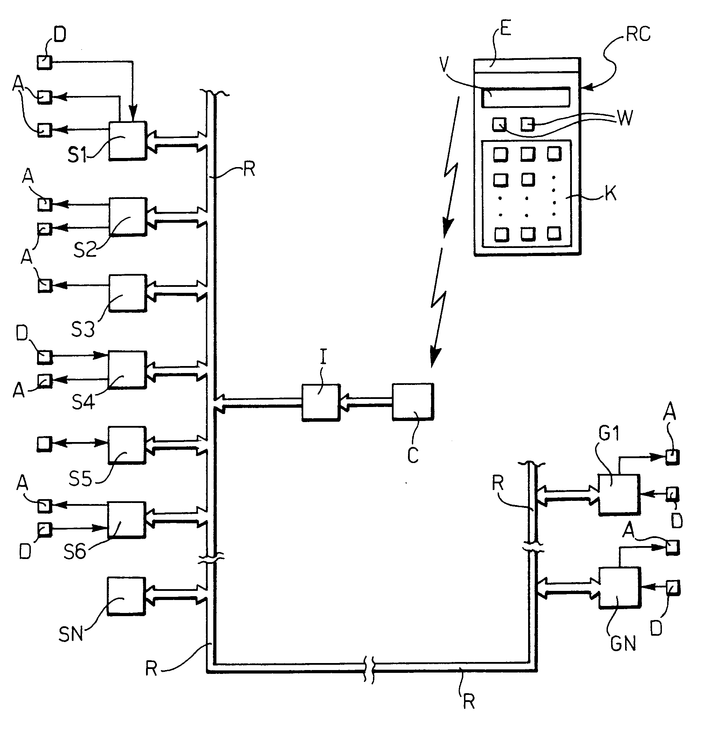

Further characteristics and advantages of the invention will become apparent from the following detailed description, given with reference to the attached drawing, provided purely by way of non-limitative example, in which there is shown a control system according to the invention for electronic and electrical apparatus installed on a motor vehicle.

In the drawing the reference numerals from S1-SN indicate N electronic or electrical systems or apparatus installed on-board a motor vehicle. These systems or apparatus can be constituted for example by passenger compartment air conditioning, car radio, compact disc player (CD) cellular telephone, navigation system etc.

The systems S1-SN can have associated with them respective sensor devices D and actuators or transducers A for performing the functions respectively associated with them.

According to the invention the systems S1-SN have respective control inputs connected to a connection network R, conveniently of multiplexed type. Within the motor vehicle passenger compartment there is installed a coded radiation receiver device, in particular an infra-red sensor indicated C in the drawing.

Between this receiver and the network R there is interposed an interface and decoder device I.

The reference RC indicates a portable remote control device including control keyboard K and a coded radiation emitter E, in particular an infra-red radiation emitter operable to radiate predetermined coded adjustment and control signals, receivable by the receiver C and operable to allow selective control of the operation of the systems and apparatus S1-SN.

Conveniently, although not necessarily, the keyboard K of the remote control device RC is of multi-functional type and includes selector means exemplified in the drawing with two keys indicated W, which, depending on the condition in which they are set, allow the user to control, by means of the keyboard K, a different on-board electronic or electrical system or apparatus. Thus, for example, when the selector devices are set in a first condition, the keyboard K allows the user to control the operation of the air conditioning system, in a second condition it allows control of the operation of the hi-fi system, etc.

Advantageously the remote control device RC further includes a display device V, preferably of liquid crystal alphanumeric type, operable to provide an indication of the on-board system or apparatus corresponding to the condition in which the selection means are set, and the function corresponding to the multifunctional key of the keyboard K which is actuated at any one time.

The above described system therefore allows the passenger in the front passenger seat as well as the rear passengers also to control easily the electronic or electrical systems and apparatus on-board the motor vehicle, without requiring the provision of supplementary cables.

The remote control device RC can also be utilised as a redundant control device even by the driver if the traditional fixed control devices arranged, for example on the instrument panel should fail or experience anomalous functioning.

Conveniently the portable remote control device RC can be made in such a way as to be able to handle a large number of on-board systems, in particular a greater number than the foreseeable number that the motor vehicle manufacturer may decide to install on-board. This makes it possible to program the remote control device also for systems which may subsequently be installed on-board, with the sole condition that such additional systems must also be connected to the multiplex connecting network R.

In the drawing, further on-board electronic or electrical systems, indicated G1-GN are shown connected to the connection network R. These systems represent systems for controlling the operation of the motor vehicle's internal combustion engine (ignition/fuel injection) or the motor vehicle is equipment such as the anti-lock braking system (ABS, etc).

Correspondingly the remote control device RC is then prearranged to allow selective activation/disactivation of one or more of such systems.

This makes it possible to achieve an effective anti-theft function in an extremely simple manner and without additional costs.

The connection network R which interconnects the on-board systems S1-SN and possibly the systems G1-GN can conveniently be used for testing and/or diagnostic operations for the purpose of the production phase of the motor vehicle, and also, later, for the identification of functional anomalies or breakdowns.

For this purpose the decoder and interface device I is arranged to recognise interrogation messages for testing and/or diagnosis which can be transmitted to the receiver device C by means of a supplementary portable remote control device separate from that described above, but analogous to it, with which employees engaged on testing and/or diagnosis of the on-board systems are provided.

Naturally, the principle of the invention remaining the same, the embodiments and details of construction can be widely varied with respect to what has been described and illustrated purely be way of non-limitative example without by this departing from the ambit of the present invention.

## Claims

1. A motor vehicle including a plurality of on-board electronic or electrical systems or apparatus (S1-SN), such as for example an air conditioning system etc, provided with respective manual control devices (RC) which can be actuated from within the motor vehicle passenger compartment;
characterised by the fact that it comprises
a coded radiation receiver device (C), in particular one sensitive to infra-red radiation, installed within the motor vehicle passenger compartment;
an electrical connection network (R) in particular of multiplex type, to which the control inputs of the said on-board electronic or electrical devices or apparatus (S1-SN) are connected and,
by the fact that the said control means comprise
a portable remote control device (RC) including a control keyboard (K), a coded radiation emitter (E), in particular an infra-red radiation emitter, adapted to radiate coded adjustment and control signals receivable by the said receiver (C) and operable to allow selective control of the operation of the said on-board electronic or electrical systems or apparatus (S1-SN).

2. A motor vehicle according to Claim 1, characterised by the fact that the said remote control device (RC) includes a multi-functional keyboard (K) including at least one selector device (W) and a multiplicity of multifunctional keys (K) which, in dependence on the setting of the said selector device (W) allow control of predetermined functions of different on-board electronic or electrical system or apparatus (S1-SN).

3. A motor vehicle according to Claim 2, characterised by the fact that the portable remote control device (RC) further includes a display device (V) operable to provide an indication of the on-board system or apparatus (S1-SN) corresponding to the setting of the said at least one selector device (W).

4. A motor vehicle according to Claim 1 or Claim 3, characterised by the fact that the portable remote control device (RC) includes a display device (V) operable to provide an indication of the function corresponding to the multifunctional key (K) activated at any one time.

5. A motor vehicle according to any preceding Claim characterised by the fact that the said on-board systems (S1-SN;G1-GN) include at least one control system (G1-GN) the disablement of which is capable of impeding the operation of the motor vehicle, and by the fact that the said remote control device (RC) is operable to allow the emission of signals for causing enablement/disablement of the said control system (G1-GN).

6. A motor vehicle according to any preceding Claim, characterised by the fact that the said decoder and interface device (I) is capable of recognising interrogation messages for testing and/or diagnosis of anomalies or breakdowns of the on-board electronic or electrical systems or apparatus (S1-SN;G1-GN).

7. A motor vehicle according to Claim 6, characterised by the fact that it includes a further portable remote control device operable to emit coded vector radiation interrogation messages for testing and/or diagnosis of anomalies or breakdowns of the said on-board electronic or electrical systems or apparatus (S1-SN;G1-GN); the said coded radiation being receivable by the said receiver (C).
